**Europäisches Patentamt**

**European Patent Office**

**Office européen des brevets**

(11) Publication number: **0 012 119**

**A1**

# EUROPEAN PATENT APPLICATION

(21) Application number: **79830046.3**

(22) Date of filing: **21.11.79**

(51) Int. Cl.³: **G 01 S 7/02**
**G 01 S 7/28**

(30) Priority: **30.11.78 IT 5214178**

(43) Date of publication of application:
**11.06.80 Bulletin 80/12**

(84) Designated Contracting States:
**BE DE FR GB SE**

(71) Applicant: **SELENIA INDUSTRIE ELETTRONICHE**
**ASSOCIATE S.p.A.**
**Via Tiburtina, KM 12.4**
**I-00131 Roma(IT)**

(72) Inventor: **Giorgio, Cagnazzo**
**Via di Casal dei Pazzi, 270**
**I-00156 Roma(IT)**

(54) **Automatic radar emission extractor.**

(57) Automatic radar emission extractor connected to an interceptor which converts impulse parameters such as carrier frequency, direction of incidence, duration and amplitude of received radar emission into digital form.

EP 0 012 119 A1

./...

Croydon Printing Company Ltd.

FIG. 1

- 1 -

## AUTOMATIC RADAR EMISSION EXTRACTOR

The invention herein refers to an automatic radar emission extractor. In particular, it refers to the structural realization of an automatic radar emission extractor connected to an interceptor which is able to convert the impulse parameters of received radar emissions to digital form.

Such parameters are: the carrying frequency, the direction of origin, the duration of impulse and the amplitude.

For automatic radar emission extractor is intended a system which accepts data in codified form relative to each impulse of all the radar emissions present in the electromagnetic environment as input, re-arranges them according to the different types of emission, extracts from them the characteristics parameters and presents them in concise form on an appropriate display.

In the existing techniques, such a function comes about by resorting to the following procedure: for a certain number of emissions, known apriori, a certain number of digital filters are predisposed for the afore seid parameters (excluding the amplitude and the direction of origin as much as the emission is not identified), together with a time sequence of apertures in time, with the aim of considering in the filter the period or repetition of the emission itself. In such a way it is possible to overcome the sequence of interlaced impulses, known apriori, from the other received impulses.

For the emissions not known apriori, means are taken to visualize each parameter on separate screens or else on bi-dimensional screens (generally angle-frequency or else duration of impulse-angle). At this point an operator is able to predispose an appropriate filter template in the dimensions of the screen coordinates, that isolates the desired sequence from the others and therefore allows for the measurement of the repetition period and the other characteristics at longer time intervals from the emission itself (cadence of rotation at the antenna and type of scanning) and also time tracking of the isolated emission.

The disadvantages of this system of extraction are that the atmosphere emissions are still noteworthy. In more, there is need for a full time operator who would otherwise concentrate on more important tasks such as tactical evaluations and countermeasures, also the use of an operator can only assure slow reaction to the variation of the electromagnetic environment and greatly increase the possibility of loosing short term emissions that are not known apriori.

In order to overcome this inconvenience it is necessary that the function of "filter" of the emissions not known apriori be made automatically and in a way that the reaction times be adequate.

To obtain this result, a possible structure to realize is one that memorizes for a certain time the impulses received, it examines them and it associates them and then it refers itself to a successive group of impulses. This can be realized by means of two types of structure: one that works on a full memory (calculates when the memory is full) and one that works at the completion of time, elaborates, after a certain time has elapsed, on that which is gathered in the memory.

The present invention refers to an extractor that works according to the second type of structure.

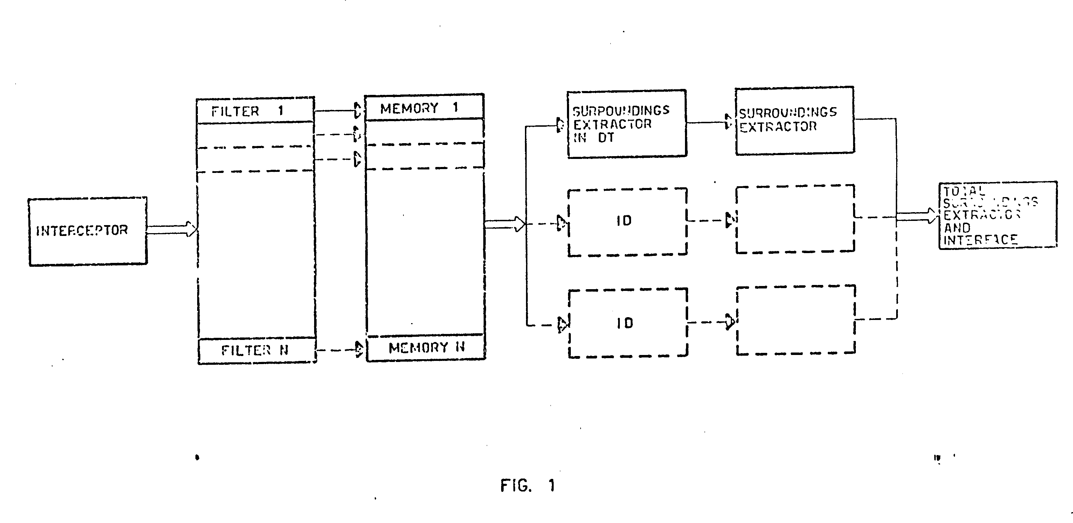

A description of the above mentioned can be obtained by referring to figure 1 which demonstrates, in block form, the structure object of the invention. The makeup of the extractor is as follows: the impulses of the emitting radar, received in real time and converted into digital form in its impulse parameters (angle, frequency, duration of impulse and amplitude) from the receiver, are gathered by a group of digital filters (block 1 in figure 1) whose filtering templates are automatically adapted to the existing electromagnetic surroundings in a rather short time interval which will be called dt.

The functioning principal of this template is the following.

At the beginning of the time interval dt, the first impulse received, pertaining to a Radar 1 characterized by a phase $F_1$, and angle $G_1$, and an impulse duration $PW_1$ determines the establishment, in the first filter which makes up part of the above mentioned group, of a sequence of acceptance parameters equal to $F_1$, $G_1$, $PW_1$, in which the acceptance interval is given by $F_1 \pm \Delta F$, $G_1 \pm \Delta G$, $PW_1 \pm \Delta PW_1$ in which $\Delta T$, $\Delta G$ and $\Delta PW$ depend upon the characteristics of the means of measurement and those of the electromagnetic environment.

The amplitude A of the reception impulse does not establish an acceptance window because this magnitude can be a variable parameter at very short time intervals (for example in relation to the antenna lobe size).

After the adjustment of the first filter it comes about that a successive impulse from the Radar 1 sequence will be accepted by the afore mentioned filter as much as it is characterized by the same parameters ($F_1$, $G_1$, $PW_1$) and can nevertheless still be memorized together with its arrival time such as to furnish information and a basic of calculation to determine the value and the structure of the repetition rythm of the impulse.

An impulse originating from a Radar 2 is rejected by the first filter and will determine the adaptation of a second template characterized by an acceptance interval $F_2 \pm \Delta F$, $G_2 \pm \Delta G$, $PW_2 \pm \Delta PW$ according to the manner described above

This functioning mechanism is called filter adaptation in time dt to the electromagnetic environment.

This continues in sequence with the third, fourth etc. filters, determining the adaptations of a new filter whenever an arriving impulse is rejected by all the preceding filters.

This operating sequence continues until the time interval dt expires.

During this time interval a certain number n of radar sequences can be accepted, that generally is less than the maximum number of existing radar sequences in the atmosphere.

Therefore, a characteristic of the filter group is that the number of filters is not proportional to the foreseen total number of emissions present, but to the use of the receiver by the emissions that are foreseen to be received during the above time interval dt.

The time interval dt is chosen proportionally to the foreseen maximum receiving time of illumination of a scanning radar.

The filters remain adjusted to the external environment for the same time interval dt after which they loose the memorized received adaptation and are made available to be newly adapted to the existing electromagnetic environment in the successive time interval dt.

In this way, during each time interval the parameters of the impulses relative to the emissions that are present in the interval itself are picked up.

If the number of filters is well proportioned in relation to the maximum traffic foreseen, the probability that an emission not be picked up by the filters that adapt themselves to the electromagnetic environment is small. Moreover, the impulses picked up by each filter are limited to a maximum number (the exceeding ones are discarded).

Besides this, to each of these impulses is associated its respective time of arrival and it is then reserved in a memory bank foreseen for each filter.

On the expiration of the time interval dt the Contents of the memory bank of each filter is passed to one or more means of programmable calculation that have the task of determining how many and which emissions were present in the said time interval and to calculate the non impulsive parameters and in the shortest time of the picked up emissions (cadence of impulse time repetition and time of cadence). The means of calculation that work in pipe-line with the group of filters, carry

out this operation in the time interval dt succesive to the pick up interval by the filters.

With this device, therefore. an automatic extraction in time dt is realized.

In the time interval $dt_2$ succesive to $dt_1$, the same operation is performed by the group of filters on the radar sequences that are received in the said interval.

In general. the radars present in the time interval dt will be the same which are already present in the interval $dt_2$ plus others that insurge in the interval dt, where other radars present in $dt_1$ shall have ceased to exist (or the receiver has not been capable of receiving an adequate number of impulses to make possible the extraction operation in the time dt).

Finally, the two extracted environments in the times $dt_1$ and $dt_2$ will generally have some radars in common, while some will only be present in $dt_1$ or only in $dt_2$. After a sufficiently large number of $dt_1$ intervals, all the radars present in the electromagnetic environment will have had a predetermined probability to have been received and memorized in at least one of the dt intervals.

Therefore, having available in short time intervals proceeding the extractor, one or more means of calculation, it is possible to say after an adequate time $\Delta t \gg$ dt: in what time interval $dt_1$ the emission of each radar has been received, with what characteristics, and with what amplitude.

This permits the automatic extraction of the environment, characterizing in such a way the behaviour of the emitter in the time t and therefore permitting the examination of the parameters in longer time intervals (antenna rotation cadence and type of cadence).

It is worthwhile to note that the succeeding integration operations come about one after the other always in the successive time intervals dt.

For example, in the time $dt_3$ are integrated $dt_1 + dt_2$; in $dt_4$ is integrated $dt_3 +$ the integration of $dt_1 + dt_2$ and so on.

The quoted time $\Delta t \gg$ dt is not an extractor parameter but only indicates a time interval sufficiently long, starting from the instant of light up, in order to allow the extractor to have arrived at a steady state condition.

The results of the integration are transferred to the introducing means in human time (and therefore not every dt).

As we have seen however, the automatic extraction is therefore realized by integrating the extracted environments in the times dt by means of one or more successive means of programmable calculation that execute the operations as in a film in which the frames are the extracted environment in the times dt. These last means of calculation have therefore the task of establishing how many emissions are present in the atmosphere and to calculate the long time parameters (antenna sweep and time of sweep).

If the integration operation is realized with a single means of calculation, the afore mentioned is generally also capable of handling the interface with the means of introduction. If instead, such an operation comes about with more parallel calculting means, another means of programmable calculation will be necessary to pick up the data from the parallel calculating means, make up the total environment and handle the interface with the introducing means.

Therefore, the object of the invention herein is an automatic radar emission extractor connected to an interceptor capable of converting the impulse parameters of the received radar emission, characterized by the fact that they are made up of a group of autoadaptive filters with respect to the said parameters, into digital form; a memory bank associated to each filter of the group in which are reserved the impulses accepted by the filter together with their respective arrival times; one or more means of programmable calculation that execute the automatic extraction in a time dt;

one or more second means of programmable calculation that execute the automatic extraction at long time intervals by integrating the extracted environment in said time dt;

in the case in which the said first and/or second means of programmable calculation are multiple, an ulterior means of programmable calculation for the calculation of data from the parallel environment extractors and for the interface realization with the means of introduction.

The present invention has been described in one of its realized forms but it can be modified and substitutions made without, because of this, leaving the limits of protection of the following industrial patent-right.

- 1 -

CLAIMS

1) Automatic radar emission extractor connected to an interceptor capable of converting into digital form the impulse parameters of the received radar emissions characterized by the fact of being made up of a group of digital filters auto adaptive to the said parameters;

a memory bank associated to each filter of the group in which are put the impulses accepted by the filter together with their respective arrival times;

One or more first means of programmable calculation that follow the automatic extraction in a time interval dt;

one or more second means of programmable calculation that perform the automatic extraction at long time intervals by integrating the extracted environment in said time interval dt;

in the case that said first and-or second means of programmable calculation are multiple, an ulterior means of programmable calculation for the gathering of data from the parallel data extractor and for the realization of the interface with the means of introduction.

2) Automatic extractor according to the following claims 1, characterized by the fact that the various operative blocks perform the operations relative to the extractions in succession in the constant time dt.

3) Automatic extractor according to the claims 1 and 2 characterized by the fact that the number of said autoadaptive digital filters is such to guarantee a fixed probability of being able to gather an insurgent emission in the time interval dt in situations of foreseen maximum traffic.

4) Automatic extractor according to the claims from 1 to 3 characterized by the fact that said autoadaptive filters operate according to the mechanism of utilizing impulse parameters as they are received in order to establish the relative acceptance intervals in succession as impulses discarded by all the preceeding filters turn up.

5) Automatic extractor according to claim nr. 4 characterized by the fact that said parameters are the phase, the angle and the duration of the impulse.

6) Automatic extractor according to claim no. 5 characterized by the fact that at the end of every time interval dt the filters loose their memory of the receive adaptation and are available to adapt themselves to the electromagnetic environment that is present in the succesive interval of time dt.

7) Automatic extractor according to claims 1 through 6 characterized by the fact that each of the said digital filters has the capacity of memorizing a limited number of accepted impulses such as to guarantee with a pre-established probability the correct determination of the lack of emission impulse repetition or of the acceptance radar emissions by the filter itself.

8) Automatic extractor according to the claims 1 to 8 characterized by the fact that said means of calculation are made up of non programmable logic circuits.

9) Automatic extractor of radar emission according to each of the preceeding claims substantially illustrated, claimed and described.

FIG. 1

## DOCUMENTS CONSIDERED TO BE RELEVANT

| Category | Citation of document with indication, where appropriate, of relevant passages | Relevant to claim |
|---|---|---|
| | US - A - 4 025 920 (H.J.P. REIT-BOECK et al. )  * Figures 1,2,3; from column 1, line 10 to column 3, line 66; from column 5, line 8 to column 8, line 39 * | 1,5 |
| | FR - A - 2 322 380 (WESTINGHOUSE)  * Figures 1,3; from page 1, line 15 to page 2, line 25; from page 5, line 38 to page 7, line 30 * | 1 |
| A | US - A - 3 714 654 (S.A. WICKS et al. )  * Figure 1; column 1, lines 19-39; from column 2, line 1 to column 3, line 37 * | 1 |
| A | US - A - 4 109 197 (M.R. LANG,Jr. et al. )  * Figure 1; column 1, lines 6-10; from column 3, line 43 to column 4, line 51 * | 1 |
| A | US - A - 3 806 808 (R.R. WILLMORE)  * Figure 3; column 1, lines 6-10; from column 4, line 4 to column 6, line 18 * | 1 |

**CLASSIFICATION OF THE APPLICATION (Int Cl. ³)**

G 01 S 7/02
7/28

**TECHNICAL FIELDS SEARCHED (Int.Cl. ³)**

G 01 S 7/02
7/28
7/36
7/38

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 06-02-1980 | CANNARD |

EPO Form 1503.1 06.78